# EUROPÄISCHE PATENTSCHRIFT

(11) **EP 1 151 258 B1**
(45) Veröffentlichungstag und Bekanntmachung des Hinweises auf die Patenterteilung: **27.08.2003**
(21) Anmeldenummer: 00901094.3
(22) Anmeldetag: 12.01.2000
(51) Int. Cl.: G01K 7/18

(54) **Verfahren zur Herstellung eines Platin-Temperatursensors unter Verwendung von gebrannten Keramiksubstraten**
Method of producing a platinum temperature sensor using burnt ceramic substrates
Procédé de fabrication d'un thermomètre à résistance de platine utilisant des substrats en céramique cuits

(30) Priorität: 14.01.1999 DE 19901184
(43) Veröffentlichungstag der Anmeldung: 07.11.2001
(60) Teilanmeldung: 02022147.9
(73) Patentinhaber: SENSOTHERM TEMPERATURSENSORIK GmbH, 90441 Nürnberg (DE)
(72) Erfinder: ZITZMANN, Heinrich, D-91207 Lauf an der Pegnitz (DE)
(74) Vertreter: Schoppe, Fritz, Dipl.-Ing.
(86) Internationale Anmeldenummer: EP0000178
(87) Internationale Veröffentlichungsnummer: WO00042402

(56) Entgegenhaltungen:
- DE-A- 3 829 764
- DE-A- 4 445 243
- DE-C- 3 733 192

## Beschreibung

Die vorliegende Erfindung bezieht sich auf ein Verfahren zur Herstellung eines Platintemperatursensors, bei dem ein Platindünnfilmwiderstand, der auf ein Keramiksubstrat aufgebracht ist, zur Temperaturerfassung verwendet wird.

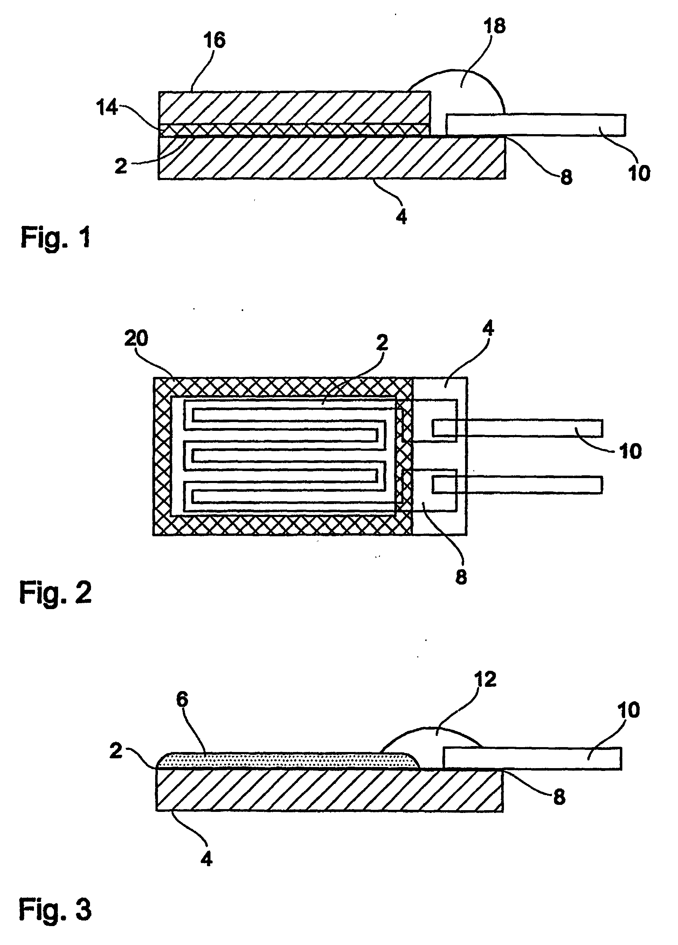

Ein bekannter Platintemperatursensor ist in Fig. 3 dargestellt. Bei diesem bekannten Platintemperatursensor ist ein Platindünnfilmwiderstand 2 auf ein Keramiksubstrat 4, das üblicherweise aus Aluminiumoxid Al₂O₃ besteht, aufgebracht. In dem Bereich, in dem der Platindünnfilmwiderstand 2 gebildet ist, ist auf der Oberfläche des Keramiksubstrats 4 eine Schutzglasur 6 vorgesehen. Die Platinschicht, in der der Platindünnfilmwiderstand 2 üblicherweise meanderförmig gebildet ist, ist ferner strukturiert, um Anschlußflächen 8 aufzuweisen, mit denen Anschlußdrähte 10 zur Entnahme des Sensorsignals elektrisch leitfähig verbunden sind. Zur Fixierung der Anschlußdrähte 10 ist eine Glasur 12 vorgesehen.

Der in Fig. 3 dargestellte Platintemperatursensor in Dünnschichttechnik ist in seinem Anwendungsbereich normalerweise auf 600°C beschränkt. Nach einer Ausführungsform für höhere Einsatztemperaturen, die bei über 1000°C liegen können, besteht jedoch bereits seit einigen Jahren ein steigendes Interesse. Auf dem Gebiet der Hochtemperaturfühler wurden deshalb beträchtliche Anstrengungen unternommen, um Platintemperaturfühler verfügbar zu machen, die für einen Einsatz in derart hohen Temperaturbereichen geeignet sind. Durch gezielte Auswahl der Zusammensetzung der Schutzglasur 6 konnten bereits zufriedenstellende Lösungen für einige Anwendungen gefunden werden, wohingegen in sehr anspruchsvollen Einsatzgebieten, beispielsweise bei speziellen Einsätzen im Kfz-Bereich, die Ergebnisse nicht alle Anforderungen erfüllen. Beispielsweise ist die Langzeitstabilität von Temperaturfühlern der oben beschriebenen Art insbesondere bei Beaufschlagung mit einem gewissen Meßstrom, der beispielsweise bei 5 mA liegen kann, bei den auftretenden hohen Temperaturen im Bereich von 800°C bis 1000°C nicht ausreichend gewährleistet, da die verwendeten Schutzglasuren bei diesen hohen Temperaturen durch den notwendigen Meßstrom elektrochemisch zersetzt werden können. Die dabei auftretende Materialwanderung beeinflußt die Eigenschaften des Platins negativ, so daß dadurch die Stabilität der Fühler und somit die Meßgenauigkeit beeinträchtigt wird.

Durch eine gezielte Auswahl der Zusammensetzung der Schutzglasuren konnten in einem gewissen Umfang Verbesserungen erreicht werden, wobei jedoch keine Schutzglasuren gefunden wurden, die bei Dauerbelastungen in einem Temperaturbereich von 1000°C oder darüber der elektrochemischen Zersetzung durch den Meßstrom widerstehen.

Aus dem Artikel "Fügen von Technischen Keramiken mit Keramik-Grünfolien" von M. Neuhäuser, u.a., cfi/Ber. DKG 72 (1995) Nr. 1-2, sind Verfahren zum Fügen von technischen Keramiken bekannt, bei denen die Keramik-Grünfolien verwendet werden, um zwei Keramikschichten miteinander zu verbinden. Voraussetzung für das dort beschriebene Fügeverfahren ist, daß die Sintertemperatur der Keramik-Grünfolie unter der Sintertemperatur der zu fügenden Keramik liegt.

Ein Temperatursensor, der eine Platinwiderstandsschicht aufweist, die auf ein Keramiksubstrat aufgebracht ist und durch eine Glasur eingekapselt ist, ist in der DE 7629727 U1 offenbart.

Aus der DE 37 33 192 C1 ist ein PTC-Temperaturfühler bekannt, bei dem ein mittels einer Platindickschichttechnik gebildeter Platinwiderstand zwischen zwei Keramik-Grünschichtfolien und einer interlaminaren Binderschicht angeordnet wird, woraufhin die beiden Folien unter Anwendung eines Drucks und einer erhöhten Temperatur zusammenlaminiert und daraufhin gesintert werden.

In der DE 4445243 A1 ist ein Temperaturfühler beschrieben, bei dem drei rohe Keramiksubstrate zusammenlaminiert, gepreßt und bei 1.600°C gebrannt werden, um ein einheitliches Stück zu bilden. Vor dem Laminieren wird dabei zwischen zwei der Keramiksubstrate ein Platinwiderstand angeordnet.

Die Aufgabe der vorliegenden Erfindung besteht darin, ein Verfahren zum Herstellen eines Platintemperatursensor zu schaffen, der auch bei Dauerbelastungen in einem hohen Temperaturbereich zuverlässige Meßergebnisse liefert.

Diese Aufgabe wird durch ein Verfahren nach Anspruch 1 gelöst.

Der vorliegenden Erfindung liegt die Erkenntnis zugrunde, daß Keramikmaterialien, insbesondere Aluminiumoxid Al₂O₃, gegen die oben beschriebene strombedingte Zersetzung unempfindlich ist, und somit dieses Material, das zudem bei Dünnschicht-Platintemperatursensoren üblicherweise als Substratmaterial für den Platinfilm verwendet wird, vorteilhaft auch als Schutzmaterial zur Kapselung der Platinfilmschicht verwendet werden kann. Somit können die Probleme der elektrochemischen Zersetzung und der damit verbundenen Verschlechterung der Eigenschaften des Platintemperatursensors verhindert werden, wenn auch die Schutzabdeckung aus einem Keramikmaterial realisiert wird.

Die vorliegende Erfindung schafft ein Verfahren , bei dem ein Platindünnfilmwiderstand auf ein gebranntes Keramiksubstrat aufgebracht ist. Eine gebrannte Keramikabdeckschicht ist mittels einer durch eine Druck- und Temperaturbehandlung aus einer Keramikgrünschicht erzeugten Verbindungsschicht derart mit dem Keramiksubstrat verbunden, daß der Platindünnfilmwiderstand gegenüber der Umgebung abgedichtet eingekapselt ist.

Bei dem erfindungsgemäß hergestellten Platintemperatursensor ist daher der strukturierte Platinfilm zum einen ausreichend gegen mechanische und chemische Umwelteinflüsse geschützt. Zum anderen liefert der erfindungsgemäß hergestellte Platintemperatursensor auch bei Dauerbelastungen in einem hohen Temperaturbereich, beispielsweise um oder über 1000°C, zuverlässige Meßergebnisse, da die oben beschriebenen nachteiligen Zersetzungserscheinungen bei dem erfindungsgemäßen Platinfilmtemperatursensor nicht auftreten.

Bei dem erfindungsgemäßen Verfahren zum Herstellen eines Platintemperatursensors wird eine Verbindungsschicht auf die Hauptoberfläche eines gebrannten Keramiksubstrats aufgebracht, auf der ein Platindünnfilmwiderstand vorgesehen ist. Auf die Verbindungsschicht wird nachfolgend eine gebrannte Keramikabdeckschicht aufgebracht, derart, daß der Platindünnfilmwiderstand gegenüber der Umgebung abgedichtet eingekapselt ist. Nach dem erfindungsgemäßen Verfahren wird als Verbindungsschicht eine Keramikgrünschicht verwendet, die unter Ausübung eines Drucks einer Temperaturbehandlung unterzogen wird, um dadurch die Keramikabdeckschicht mit dem Keramiksubstrat zu verbinden.

Bei dem erfindungsgemäß hergestellten Platintemperatursensor ist die Verbindungsschicht entweder ganzflächig auf das mit dem Platindünnfilmwiderstand versehene Keramiksubstrat aufgebracht oder alternativ lediglich auf eine Umrandungsfläche desselben, so daß der Platindünnfilmwiderstand von der Verbindungsschicht umgeben ist. Ist die Verbindungsschicht nur auf der Umrandungsfläche vorgesehen, ist es bevorzugt, auf den seitlichen Kanten der sich ergebenden Schichtstruktur eine Versiegelungsschicht, die beispielsweise aus Glas bestehen kann, vorzusehen. Eine solche Schicht kann jedoch auch vorgesehen werden, wenn die Verbindungsschicht ganzflächig aufgebracht ist.

Bevorzugte Ausführungsbeispiele der vorliegenden Erfindung werden nachfolgend bezugnehmend auf die beiliegenden Zeichnungen näher erläutert. Es zeigen:
- Fig. 1:: eine schematische Querschnittansicht eines erfindungsgemäßen Platintemperatursensors;
- Fig. 2:: eine schematische Draufsicht eines erfindungsgemäßen Platintemperatursensors; und
- Fig. 3:: eine schematische Querschnittansicht eines bekannten Platintemperatursensors.

Zunächst wird bezugnehmend auf Fig. 1 ein erstes Ausführungsbeispiel eines erfindungsgemäßen Platintemperatursensors näher beschrieben. Der Platintemperatursensor besitzt ein Keramiksubstrat 4, daß bei bevorzugten Ausführungsbeispielen aus Al₂O₃ besteht, auf das eine strukturierte Platinschicht aufgebracht ist, die eine Platinwiderstandsbahn 2 und Anschlußflächen 8 definiert. Mit den Anschlußflächen 8 kann ein Anschlußdraht 10 elektrisch leitfähig verbunden werden. Mittels einer Verbindungsschicht 14, die bei bevorzugten Ausführungsbeispielen der vorliegenden Erfindung ebenfalls aus Al₂O₃ besteht, ist auf die Oberfläche des Keramiksubstrats 4, auf der die Platinwiderstandsbahn vorgesehen ist, eine Keramikabdeckschicht 16, die bei bevorzugten Ausführungsbeispielen der vorliegenden Erfindung ebenfalls aus Al₂O₃ gebildet ist, aufgebracht. Ferner ist in Fig. 1 eine Glaskeramik 18 dargestellt, die zur Fixierung des Anschlußdrahts dient.

Es ist bevorzugt, für die Abdeckschicht 16 das gleiche Material zu verwenden, das für das Keramiksubstrat 4 verwendet ist. Jedoch kann auch ein ähnliches Material verwendet werden. Die Abdeckschicht 16 kann die gleiche Dicke aufweisen, wie die Keramikschicht oder eine geringere Dicke, beispielsweise 10 bis 20% dünner, solange durch die Dicke der Abdeckschicht eine ausreichende Schutzwirkung gegen widrige Umgebungseinflüsse erreicht werden kann. Die Verbindungsschicht kann eine geringe Dicke besitzen, da die Schutzwirkung für den Platinfilm gegen die äußere Atmosphäre durch die dickere Abdeckschicht 16 erreicht wird.

Zur Herstellung des erfindungsgemäßen Platintemperatursensors wird zunächst das gebrannte Keramiksubstrat 4, das bei bevorzugten Ausführungsbeispielen der vorliegenden Erfindung ein Al₂O₃-Substrat ist, mit der darauf vorgesehenen Platinwiderstandsbahn 2 bereitgestellt. Nachfolgend wird zumindest im Bereich der Platinwiderstandsbahn 2 eine sehr dünne Keramik-Grünschicht einer Dicke von beispielsweise 0,1 bis 0,2 mm aufgebracht. Vorzugsweise handelt es sich bei dieser Verbindungsschicht um eine Al₂O₃-Grünschicht. Nachfolgend wird auf die Grünschicht die gebrannte Abdeckschicht 16, vorzugsweise ebenfalls eine Al₂O₃-Schicht aufgebracht. Dieser Gesamtschichtaufbau wird dann bei sehr hohen Temperaturen unter einem zusätzlichen äußeren Druck, der beispielsweise durch eine zusätzliche Keramikplatte erzeugt werden kann, gebrannt. Durch diesen Brennvorgang werden die beiden Keramikplatten, d.h. das Keramiksubstrat 14 und die Abdeckschicht 16, mittels der Folie 14 fest miteinander verbunden. Somit wird der Platindünnfilmwiderstand 2 dicht gegen die äußere Atmosphäre verschlossen.

Somit schafft die vorliegende Erfindung einen Platintemperatursensor, der einen sicheren Schutz des Platindünnfilmwiderstands gegen das Eindringen von Fremdmaterial aus der Umgebung auch in hohen Temperaturbereichen gewährleistet, wobei keine chemischen Zersetzungseinflüsse durch den zum Betreiben des Temperatursensors erforderlichen Meßstrom zu befürchten sind.

Es ist nicht möglich, die Keramikabdeckschicht mittels Siebdruck direkt auf das Keramiksubstrat aufzubringen, wie dies beispielsweise bei Verwendung von Glasuren als Schutzschicht durchgeführt wird. Wird Al₂O₃ als Abdeckschicht verwendet, kann diese Vorgehensweise nicht angewendet werden, da der Schmelzpunkt für Al₂O₃ viel zu hoch liegt, nämlich über dem Schmelzpunkt des Platins und überdies auch das Trägersubstrat schmelzen würde.

Auch wenn die gesamte Abdeckschicht als Grünschicht aufgebracht wird, wobei unter Grünschicht eine Keramik mit sich beim Brennvorgang verflüchtigenden Bindemitteln zu verstehen ist, ergeben sich Probleme, da diese Grünschicht beim Brennvorgang einer gewissen Schwindung unterliegt, wobei die Abdeckschicht aufgrund von Schrumpfungsrissen nicht die geforderte Dichtheit aufweisen würde. Die oben genannte Schwindung macht sich umso mehr bemerkbar, je dicker die Folie ist. Andererseits ist aber eine gewisse Dicke notwendig, im Bereich von 0,3 bis 0,5 mm, um bei den angesprochenen hohen Temperaturen von 800°C bis 1000°C oder darüber hinaus eine ausreichende Schutzwirkung gegen widrige Umgebungseinflüsse zu erreichen.

In Fig. 2 ist eine schematische Draufsicht eines alternativen Ausführungsbeispiels eines erfindungsgemäßen Platintemperatursensors dargestellt. In Fig. 2 ist wiederum das Keramiksubstrat 4, das als Träger dient, und die auf demselben strukturierte Platinschicht, die einen Platindünnfilmwiderstand 2 und Anschlußflächen 8 definiert, gezeigt. Ferner sind zwei jeweils mit einer der Anschlußflächen 8 verbundene Anschlußdrähte 10 dargestellt. Bei dem in Fig. 2 dargestellten Ausführungsbeispiel ist jedoch die Verbindungsschicht 20 nicht ganzflächig auf die Oberfläche des Keramiksubstrats 4 und des Platindünnfilmwiderstands 2 aufgebracht, sondern lediglich in einem den Platindünnfilmwiderstand 2 umgebenden Randbereich. Bei diesem Ausführungsbeispiel ist der Platindünnfilmwiderstand durch die Verbindungsschicht nicht bedeckt. Mittels dieser, den Platindünnfilmwiderstand 2 umgebenden Verbindungsschicht 20 wird nunmehr eine Abdeckschicht (in Fig. 2 nicht gezeigt) mit dem Keramiksubstrat 4 verbunden, so daß wiederum der Platindünnfilmwiderstand 2 gegenüber der Umgebung abgedichtet eingekapselt ist. Bei diesem Ausführungsbeispiel ist es bevorzugt, auf den senkrechten äußeren Kanten, die durch die Schichtstruktur gebildet sind, eine zusätzliche Versiegelungsschicht vorzusehen, die beispielsweise aus Glas besteht.

Bei dem in Fig. 2 dargestellten Ausführungsbeispiel kann als Verbindungsschicht 20 entweder ebenfalls eine Al₂O₃-Folie verwendet werden, während alternativ als Verbindungsschicht anstelle der Folie eine Schutzglasur zur abdichtenden Verbindung, d.h. Verschmelzung des Trägersubstrats mit der Abdeckfolie verwendet werden kann. Auch bei Verwendung der Schutzglasur als Verbindungsschicht 20 besitzt die stromführende Platinwiderstandsbahn 2 keinerlei Kontakt zu der Glasurschicht 20, so daß die oben beschriebenen Zersetzungserscheinungen in diesem Fall nicht auftreten. die Verwendung einer Glasur für die Verbindungsschicht 20 kann Vorteile bei der Herstellung bringen und ist bis 1000°C einsetzbar, wenn eine hochschmelzende Glasur mit einer Schmelztemperatur von mehr als 1.300°C verwendet wird.

Die erfindungsgemäß verwendete Verbindungsschicht, 14 in Fig. 1 und 20 in Fig. 2, kann alternativ durch eine im Siebdruckverfahren aufgedruckte Keramikpaste ersetzt sein. Hierbei wird auf das mit dem strukturierten Platinfilm beschichtete und strukturierte Keramiksubstrat eine Keramikpaste im Siebdruck aufgedruckt und nach einer Vortrocknung mit der Keramikabdeckplatte abgedeckt. Nachfolgend wird unter Ausübung eines Drucks ein Brennen durchgeführt, um Keramiksubstrat und Keramikabdeckschicht zu verbinden. Die Keramikpaste kann aus einem angepasteten Gemenge aus mehreren Keramikpulvern und Quarzmehl, beispielsweise Al₂O₃, MGO, SiO₂, bestehen.

Die vorliegende Erfindung schafft somit einen Platintemperatursensor, der auf der einen Seite einen sicheren Schutz des Platinfilmwiderstands vor äußeren Einflüssen liefert und zum anderen auch bei einer Dauerbelastung in hohen Temperaturbereichen keine Verschlechterung der Genauigkeit besitzt.

Der erfindungsgemäße Platintemperatursensor kann mit Ausnahme des Anbringens der Anschlußdrähte und des Fixierens derselben vorzugsweise im Waferverbund hergestellt werden, derart, daß aus einem Keramikwafer eine Mehrzahl von Platintemperatursensoren hergestellt werden. Nach dem Vereinzeln der einzelnen Platintemperatursensoren kann dann auf die jeweiligen senkrechten Schnittkanten die oben genannte Versiegelungsschicht aufgebracht werden.

## Patentansprüche

1. Verfahren zum Herstellen eines Platintemperatursensors mit folgenden Schritten:
a) Bereitstellen eines gebrannten Keramiksubstrats (4) mit einem auf eine Hauptoberfläche desselben aufgebrachten Platindünnfilmwiderstand (2) ;
b) Aufbringen einer Verbindungsschicht (14; 20) aus einer Keramikgrünschicht auf die Hauptoberfläche des Keramiksubstrats (4); und
c) Aufbringen einer gebrannten Keramikabdeckschicht (16) auf die Verbindungsschicht (14; 20), derart, daß der Platindünnfilmwiderstand (2) gegenüber der Umgebung abgedichtet eingekapselt ist, indem die Keramikgrünschicht unter Ausübung eines Drucks einer Temperaturbehandlung unterzogen wird, derart, daß das Keramiksubstrat (4) und die Keramikabdeckschicht (16) verbunden werden.

2. Verfahren nach Anspruch 1, bei dem die Verbindungsschicht (14) im Schritt b) ganzflächig aufgebracht wird.

3. Verfahren nach Anspruch 1, bei dem die Verbindungsschicht (20) im Schritt b) in einem den Platindünnfilmwiderstand (2) umgebenden Randbereich auf das Keramiksubstrat (4) aufgebracht wird.

4. Verfahren nach einem der Ansprüche 1 bis 3, bei dem auf äußere seitliche Kanten der Schichtstruktur aus Keramiksubstrat (4), Verbindungsschicht (14; 20) und Keramikabdeckschicht (16) eine Versiegelungsschicht aufgebracht wird.

## Claims

1. Method for producing a platinum temperature sensor comprising the steps of:
a) providing a fired ceramic substrate (4) with a platinum thin-film resistor (2) applied to the main surface thereof;
b) applying a connecting layer (14; 20) made of a ceramic green layer to the main surface of the ceramic substrate (4); and
c) applying a fired ceramic cover layer (16) to the connecting layer (14; 20) in such a way that the platinum thin-film resistor (2) is sealingly encapsulated with regard to the environment by subjecting the ceramic green layer to a temperature treatment under application of pressure in such a way that the ceramic substrate (4) and the ceramic cover layer (16) will be connected.

2. Method according to claim 1, wherein the connecting layer (14) is applied as a continuous face in step b).

3. Method according to claim 1, wherein the connecting layer (20) is applied to the ceramic substrate (4) in a border area surrounding the platinum thin-film resistor (2) in step b) .

4. Method according to one of claims 1 to 3, wherein a sealing layer is applied to outer peripheral edges of the layer structure consisting of ceramic substrate (4), connecting layer (14; 20) and ceramic cover layer (16).

## Revendications

1. Procédé pour la fabrication d'un thermomètre à résistance de platine, **caractérisé en ce qu'**il comprend les étapes suivantes :
a) préparation d'un substrat céramique (4) cuit comportant, en application sur l'une de ses surfaces principales, une résistance de platine à couche mince (2) ;
b) application, sur la surface principale du substrat céramique (4), d'une couche de liaison (14 ; 20) sous forme de couche céramique non cuite ;
c) application, sur la couche de liaison (14 ; 20), d'une couche de recouvrement en céramique (16), de manière à encapsuler hermétiquement la résistance platine à couche mince (2) par rapport à son environnement, en soumettant la couche céramique non cuite à une pression et à un traitement thermique, de manière à lier le substrat céramique (4) et la couche de recouvrement en céramique (16).

2. Procédé selon la revendication 1, **caractérisé en ce que** la couche de liaison (14) de l'étape b) est appliquée sur toute la surface.

3. Procédé selon la revendication 1, **caractérisé en ce que** la couche de liaison (20) de l'étape b) est appliquée sur le substrat céramique (4) dans une zone limitrophe entourant la résistance de platine à couche mince (2).

4. Procédé selon l'une quelconque des revendications I à 3, **caractérisé en ce qu'**une couche de finition étanche est appliquée sur des bords latéraux externes de la structure de couches comportant le substrat céramique (4), la couche de liaison (14 ; 20) et la couche de recouvrement en céramique (16).
